# EUROPÄISCHE PATENTSCHRIFT

(11) **EP 1 595 599 B1**
(45) Veröffentlichungstag und Bekanntmachung des Hinweises auf die Patenterteilung: **28.02.2018**
(21) Anmeldenummer: 05006678.6
(22) Anmeldetag: 26.03.2005
(51) Int. Cl.: B01J 20/28, A62B 17/00, B01D 39/20

(54) **ADSORPTIONSFILTERMATERIAL UND SEINE VERWENDUNG**
ADSORBENT FILTER MATERIAL AND ITS USE
MATÉRIAU FILTRANT À ADSORPTION ET SON UTILISATION

(30) Priorität: 13.05.2004 DE 102004024075
(43) Veröffentlichungstag der Anmeldung: 16.11.2005
(73) Patentinhaber: Blücher GmbH, 40699 Erkrath (DE)
(72) Erfinder: von Blücher, Hasso, 40699 Erkrath (DE)
(74) Vertreter: Von Rohr Patentanwälte Partnerschaft mbB

(56) Entgegenhaltungen:
- EP-A- 0 374 426
- EP-A- 1 317 958
- DE-A1- 3 939 373
- GB-A- 2 077 141

## Beschreibung

Die vorliegende Erfindung betrifft ein Adsorptionsfiltermaterial nach dem Oberbegriff des Anspruchs 1, insbesondere für die Herstellung von Schutzmaterialien aller Art, wie Schutzanzügen, Schutzhandschuhen, Schutzschuhen und anderen Schutzbekleidungsstücken sowie Schutzabdeckungen (z. B. für Krankentransporte), Schlafsäcken und dergleichen, sowohl für den militärischen als auch für den zivilen Bereich, insbesondere für den ABC-Einsatz, und dessen Verwendung in den zuvor genannten Schutzmaterialien sowie die vorgenannten Schutzmaterialien selbst.

Es gibt eine Reihe von Stoffen, die von der Haut aufgenommen werden und zu schweren körperlichen Schäden führen. Als Beispiele seien das blasenziehende Lost (Gelbkreuz) und das Nervengift Sarin erwähnt. Menschen, die mit solchen Giften in Kontakt kommen können, müssen eine geeignete Schutzbekleidung tragen bzw. durch geeignete Schutzmaterialien gegen diese Gifte geschützt werden.

Zu diesem Zweck sind beispielsweise luft- und wasserdampfundurchlässige Schutzanzüge bekannt, die mit einer für chemische Gifte undurchlässigen Gummischicht ausgestattet sind. Nachteilig hierbei ist, daß diese Anzüge sehr schnell zu einem Hitzestau führen, da sie luft- und wasserdampfundurchlässig sind.

Schutzanzüge gegen chemische Kampfstoffe, die für einen längeren Einsatz unter den verschiedensten Bedingungen gedacht sind, dürfen jedoch beim Träger zu keinem Hitzestau führen. Zu diesem Zweck sind luft- und wasserdampfdurchlässige Schutzanzüge bekannt, die den höchsten Tragekomfort bieten.

Die luftdurchlässigen, permeablen Schutzanzüge besitzen im allgemeinen eine Adsorptionsfilterschicht mit Aktivkohle, welche die chemischen Gifte sehr dauerhaft bindet, so daß auch von stark kontaminierten Anzügen für den Träger keine Gefahr ausgeht. Der große Vorteil derartiger Systeme liegt darin, daß die Aktivkohle auch an der Innenseite zugänglich ist, so daß an Beschädigungen oder sonstigen undichten Stellen eingedrungene Gifte sehr schnell adsorbiert werden können.

Die Adsorptionsschicht in den zuvor beschriebenen, luftdurchlässigen, permeablen Schutzanzügen kann dabei derart ausgestaltet sein, daß z. B. entweder im Durchschnitt bis zu ca. 1,0 mm große Aktivkohleteilchen, insbesondere Aktivkohlekörnchen oder -kügelchen, an auf einem textilen Trägermaterial aufgedruckte Kleberhäufchen gebunden sind oder aber daß ein retikulierter Polyurethanschaum, der mit einer "Kohlepaste" (d. h. Bindemittel und Aktivkohle) imprägniert ist, als Adsorptionsschicht zur Anwendung kommt, wobei die Adsorptionsschicht im allgemeinen durch einen "Außenstoff' (d. h. ein Abdeckmaterial) ergänzt wird und an der dem Träger zugewandten Innenseite durch ein leichtes textiles Material abgedeckt ist.

Des weiteren findet man aber auch Verbundstoffe, die ein Aktivkohlefaserflächengebilde, so z. B. ein Aktivkohlefaservlies oder -gewebe, beinhalten.

So beschreibt die WO 94/01198 A1 bzw. die hieraus hervorgegangene EP 0 649 332 B1 ein mehrlagiges textiles Adsorptionsfiltermaterial gegen chemische Schadstoffe mit zwei äußeren textilen Trägerschichten und einem dazwischen angeordneten Aktivkohlefasergewebe, welches mit den beiden Außenschichten vollflächig verklebt ist, damit eine ausreichende mechanische Stabilität des Aktivkohlefasergewebes auch bei extremer mechanischer Belastung, wie sie beispielsweise beim Tragen von Schutzanzügen vorkommt, vorhanden ist. Nachteilig hierbei sind die aus der vollflächigen Verklebung resultierende hohe Menge an benötigtem Klebstoff und das folglich erhöhte Flächengewicht des resultierenden Adsorptionsfiltermaterials sowie die infolge der vollflächigen Verklebung resultierende Steifigkeit. Insbesondere nachteilig ist auch die durch die vollflächige Verklebung des Aktivkohlefasergewebes mit den beiden textilen Außenschichten resultierende Luftundurchlässigkeit, welche gemäß der WO 94/01198 A1 bzw. der EP 0 649 332 B1 dadurch kompensiert werden muß, daß in den vollflächigen Klebstoffauftrag kleine Perforationen eingebracht werden müssen.

Ferner ist in der EP 0 230 097 A2 der vergebliche Versuch beschrieben, ein stabiles Verbundmaterial in Form eines Laminats aus zwei äußeren Textillagen und einer dazwischen angeordneten Aktivkohlefasergewebeschicht herzustellen, die mit den beiden Außenlagen verklebt ist: Die auf diese Weise hergestellten Materialien halten keiner mechanischen Belastung stand, und das Aktivkohlefasergewebe zerfällt bei mechanischer Belastung zu einem feinen Staub (vgl. Seite 1, Zeile 25 bis Seite 2, Zeile 8 der EP 0 230 097 A2).

Die EP0374426 A2 betrifft ein mehrschichtiges Gewebe, welches zum Gebrauch von Schutzkleidung geeignet sein soll, wobei das Gewebe eine Schicht eines Stoffes aus Aktivkohle und eine Schicht aus Verstärkungsgewebe mit einem Flächengewicht von weniger als 100 g/ m² aufweist. Das Verstärkungsgewebe soll zudem eine Aramidefaser mit einem definierten Anfangsmodul aufweisen, so dass das eingesetzte Verstärkungsgewebe eine definierte Zugfestigkeit aufweist.

Es ist nunmehr die Aufgabe der vorliegenden Erfindung, ein Adsorptionsfiltermaterial bzw. -schutzmaterial bereitzustellen, das die zuvor geschilderten Nachteile des Standes der Technik zumindest weitgehend vermeidet bzw. abschwächt und sich insbesondere für die Herstellung von ABC-Schutzmaterialien, wie Schutzanzügen, Schutzhandschuhen, Schutzschuhen und anderen Schutzbekleidungsstücken sowie Schutzabdeckungen, Schlafsäcken und dergleichen eignet.
Eine weitere Aufgabe der vorliegenden Erfindung besteht darin, ein Adsorptionsfiltermaterial zu schaffen, welches neben einer guten Gas- und Wasserdampfdurchlässigkeit eine Schutzfunktion gegenüber chemischen und biologischen Schadstoffen und Giften, insbesondere chemischen und biologischen Kampfstoffen, gewährleistet, wobei auch eine gewisse Gewichtseinsparung des Adsorptionsfiltermaterials angestrebt ist.
Eine weitere Aufgabe der vorliegenden Erfindung besteht in der Bereitstellung eines Adsorptionsfiltermaterials, insbesondere zur Verwendung in Schutzmaterialien, wie Schutzanzügen, Schutzhandschuhen, Schutzschuhen und anderen Schutzbekleidungsstücken sowie Schutzabdeckungen, Schlafsäkken und dergleichen, welches einen hohen Tragekomfort gewährleistet.
Zur Lösung der zuvor geschilderten Aufgabenstellung schlägt die vorliegende Erfindung ein Adsorptionsfiltermaterial gemäß Anspruch 1 vor. Weitere vorteilhafte Ausgestaltungen des erfindungsgemäßen Adsorptionsfiltermaterials sind Gegenstand der Unteransprüche.
Weiterer Gegenstand der vorliegenden Erfindung sind Schutzmaterialien, insbesondere Schutzanzüge, Schutzhandschuhe, Schutzschuhe und andere Schutzbekleidungsstücke sowie Schutzabdeckungen, Schlafsäcke und dergleichen, die unter Verwendung des erfindungsgemäßen Adsorptionsfiltermaterials hergestellt sind bzw. das erfindungsgemäße Adsorptionsfiltermaterial aufweisen.
Schließlich ist ein weiterer Gegenstand der vorliegenden Erfindung die Verwendung des erfindungsgemäßen Adsorptionsfiltermaterials zur Herstellung von Schutzmaterialien aller Art, wie Schutzanzügen, Schutzhandschuhen, Schutzschuhen und anderen Schutzbekleidungsstücken sowie Schutzabdekkungen, Schlafsäcken und dergleichen, vorzugsweise für den ABC-Einsatz, und zwar sowohl für zivile als auch für militärische Anwendungen.

Gegenstand der vorliegenden Erfindung ist gemäß einem ersten Aspekt der vorliegenden Erfindung somit ein gas- und wasserdampfdurchlässiges Adsorptionsfiltermaterial mit Schutzfunktion gegenüber biologischen und chemischen Schadstoffen und Giften, insbesondere biologischen und chemischen Kampfstoffen nach Anspruch 1. Die Anmelderin hat nämlich überraschend gefunden, daß sich ein hochflexibles, mechanisch stabiles Adsorptionsfiltermaterial auch dann herstellen läßt, wenn das die Kernschicht bildende Aktivkohlefaserflächengebilde nur punktförmig mit den beiden äußeren Trägerschichten verklebt ist.
Auf diese Weise gelingt es nicht nur, ein sehr gas- und wasserdampfdurchlässiges Adsorptionsfiltermaterial mit hoher mechanischer Belastbarkeit bereitzustellen, sondern man erhält aufgrund des nur diskontinuierlichen, punktförmigen Klebstoffauftrags ein deutlich reduziertes Flächengewicht und eine deutlich erhöhte Flexibilität bzw. einen deutlich erhöhten Tragekomfort des resultierenden Adsorptionsfiltermaterials. Durch den diskontinuierlichen Klebstoffauftrag wird zudem nur ein geringer Teil der Oberfläche des Aktivkohlefaserflächengebildes belegt, so daß der überwiegende Teil der Oberfläche des Aktivkohlefaserflächengebildes für die zu adsorbierenden biologischen und chemischen Schadstoffe und Gifte frei zugänglich ist, so daß aufgrund des diskontinuierlichen Klebstoffauftrags auch die Adsorptionskapazität und -effizienz deutlich erhöht ist.

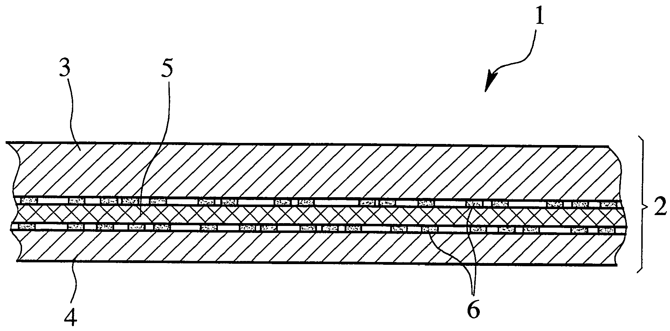

Weitere Vorteile, Eigenschaften, Aspekte und Merkmale der vorliegenden Erfindung ergeben sich aus der folgenden Beschreibung eines in der Zeichnung dargestellten, bevorzugten Ausführungsbeispiels.

Die einzige Figur zeigt eine schematische Schnittdarstellung durch den Schichtaufbau eines gas- und wasserdampfdurchlässigen Adsorptionsfiltermaterials gemäß einem bevorzugten Ausführungsbeispiel der vorliegenden Erfindung.

Die einzige Figur zeigt ein erfindungsgemäßes gas- und wasserdampfdurchlässiges Adsorptionsfiltermaterial 1 mit Schutzfunktion gegenüber biologischen und chemischen Schadstoffen und Giften, insbesondere biologischen und chemischen Kampfstoffen. Das Adsorptionsfiltermaterial 1 weist einen mehrschichtigen Schichtaufbau 2 auf, der eine erste, insbesondere flächige Trägerschicht 3 und eine zweite, insbesondere flächige Trägerschicht 4 sowie eine zwischen der ersten Trägerschicht 3 und der zweiten Trägerschicht 4 angeordnete Adsorptionsschicht 5 aufweist. Die Adsorptionsschicht 5 umfaßt ein Aktivkohlefaserflächengebilde, das mit der ersten Trägerschicht 3 und der zweiten Trägerschicht 4 mittels eines Klebstoffs 6 dauerhaft verklebt ist. Die Besonderheit der vorliegenden Erfindung ist insbesondere darin zu sehen, daß die Verklebung des Aktivkohlefaserflächengebildes mit den beiden äußeren Trägerschichten 3, 4 jeweils durch einen diskontinuierlichen Klebstoffauftrag in Form von einzelnen, nichtzusammenhängenden (d. h. also räumlich getrennt voneinander vorliegenden bzw. nicht miteinander verbundenen) Kleberpunkten 6 erfolgt. Der Begriff "Kleberpunkte" bezeichnet insbesondere winzig kleine Klebstofftröpfchen oder -häufchen, die auf die zu verklebenden Lagen bzw. Schichten aufgebracht sind, und zwar ohne einander zu berühren.

Um einerseits eine gute Gas- und Wasserdampfdurchlässigkeit und andererseits eine gute Flexibilität des erfindungsgemäßen Adsorptionsfiltermaterials 1 zu gewährleisten, bedeckt der Klebstoff 6 das Aktivkohlefaserflächengebilde der Adsorptionsschicht 5, jeweils bezogen auf eine Seite bzw. Oberfläche des Aktivkohlefaserflächengebildes, nur zu höchstens 30 %, insbesondere zu höchstens 25 %, vorzugsweise zu höchstens 20 %, ganz besonders bevorzugt zu höchstens 15 %. Mit anderen Worten ist jede der beiden Seiten bzw. Oberflächen des Aktivkohlefaserflächengebildes zu mindestens 70 %, insbesondere zu mindestens 75 %, vorzugsweise zu mindestens 80 %, ganz besonders bevorzugt zu mindestens 85 %, frei von Klebstoff und somit für die zu adsorbierenden biologischen und chemischen Schadstoffe und Gifte frei zugänglich. Auf diese Weise ist eine gute Adsorptionseffizienz und -kapazität gewährleistet. Dennoch ist der Verbund ausreichend stabil, um den mechanischen Beanspruchungen beim Tragen standzuhalten. Im allgemeinen genügt es zur Herstellung eines stabilen und mechanisch belastbaren Verbunds, daß der Klebstoff in solchen Mengen aufgetragen ist, daß er das Aktivkohlefaserflächengebilde, jeweils bezogen auf eine der beiden Seiten bzw. Oberflächen des Aktivkohlefaserflächengebildes, nur zu 5 bis 30 %, insbesondere zu 10 bis 25 %, vorzugsweise zu 10 bis 20 %, bedeckt.

Zu diesem Zweck wird der Klebstoff 6, jeweils bezogen auf eine der beiden Seiten bzw. Oberflächen des Aktivkohlefaserflächengebildes, im allgemeinen mit einem Flächengewicht (Trockengewicht) von 5 bis 30 g/m², insbesondere 5 bis 25 g/m², vorzugsweise 10 bis 20 g/m², aufgetragen. Die vorgenannten Angaben beziehen sich auf jeweils eine der beiden Seiten bzw. Oberflächen des Aktivkohlefaserflächengebildes; der Gesamtkleberauftrag, bezogen auf das gesamte Aktivkohlefaserflächengebilde, d. h. auf beide Seiten bzw. beide Oberflächen des Aktivkohlefaserflächengebildes, ist folglich doppelt so hoch.

Vorteilhafterweise ist der Klebstoff 6 auf die Trägerschichten 3, 4 und/oder auf das Aktivkohlefaserflächengebilde der Adsorptionsschicht 5 aufgedruckt, insbesondere in Form eines unregelmäßigen Rasters oder Musters derart, daß im Gebrauchszustand des Adsorptionsfiltermaterials 1 eine Gassenbildung und somit ein Durchschlagen von biologischen und chemischen Schadstoffen und Giften durch die Adsorptionsschicht 5 vermieden wird. Im allgemeinen können derartige Raster bzw. Muster für den Klebstoffauftrag computerunterstützt bzw. computergesteuert berechnet und aufgetragen werden (sogenanntes CP-Klebstoffraster bzw. Computer-Point-Klebstoffraster). Dies ist dem Fachmann an sich bekannt.

Der Klebstoff 6 zur Fixierung des Aktivkohlefaserflächengebildes an die beiden Trägerschichten 3, 4 kann beispielsweise durch eine Schablone aufgedruckt sein, deren lichter Durchmesser der Löcher für den Klebstoffauftrag 5 bis 1.000 µm, insbesondere 100 bis 575 µm, vorzugsweise 100 bis 300 µm, beträgt; dies ist der kleinste Durchmesser der Löcher, durch die der Klebstoff beim Auftragen durch die Schablone hindurchgedrückt ist. Aufgrund der Eigenschaften des Klebstoffes, insbesondere dessen Viskosität, und der Eigenschaften der zu verklebenden Substrate (d. h. Trägerschichten 3, 4 und Aktivkohlefaserflächengebilde bzw. Adsorptionsschicht 5), insbesondere deren Oberflächenspannung und deren Benetzbarkeit mit dem Kleber, sowie des Anpreßdrucks, mit dem die einzelnen Schichten zu einem Verbund laminiert werden, sind die auf den zu verklebenden Substraten im fertigen Adsorptionsfiltermaterial 1 vorhandenen Kleberpunkte deutlich größer als der lichte Durchmesser der Löcher der Auftragsschablone; die Größe der Kleberpunkte kann in weiten Bereichen variieren, und im allgemeinen liegt sie zwischen 100 und 10.000 µm, insbesondere zwischen 500 bis 5.000 µm, bezogen auf den mittleren Durchmesser eines Klebstoffpunktes.

Was den Klebstoff als solchen anbelangt, so kommen alle dem Fachmann an sich bekannten, für diese Zwecke verwendeten Klebstoffe in Betracht. Besonders geeignet sind thermoplastische Klebstoffe. Ebenfalls besonders geeignet sind reaktive, insbesondere isocyanatreaktive Klebstoffe, die nach dem Vernetzen und Aushärten zu polyurethanbasierten Verklebungen fuhren.

Was das erfindungsgemäß eingesetzte Aktivkohlefaserflächengebilde der Adsorptionsschicht 5 anbelangt, so weist dieses im allgemeinen ein Flächengewicht 20 bis 200 g/m², insbesondere 50 bis 150 g/m², vorzugsweise 80 bis 120 g/m², besonders bevorzugt 90 bis 110 g/m², auf, um einerseits eine ausreichende mechanische Stabilität bei gleichzeitig guter Flexibilität und hohem Tragekomfort sowie andererseits eine gute Adsorptionskapazität bzw. -effizienz Stabilität zu gewährleisten. Zu diesem Zweck weist das erfindungsgemäß eingesetzte Aktivkohlefaserflächengebilde im allgemeinen eine Dicke von 0,1 bis 10 mm, insbesondere 0,2 bis 0,8 mm, vorzugsweise 0,3 bis 0,5 mm, auf.
Bei dem erfindungsgemäß eingesetzten Aktivkohlefaserflächengebilde kann es sich beispielsweise um ein Gewebe, ein Gewirke, ein Gestricke, ein Gelege, ein Vlies, ein Non-Woven oder einen Verbundstoff aus Aktivkohlefasern handeln. Bevorzugter Weise ist das Aktivkohlefaserflächengebilde ein Aktivkohlefasergewebe; dies führt zu den erfindungsgemäß besten Ergebnissen.
Besonders gute mechanische Stabilitäten bei gleichzeitig hoher Adsorptionskapazität bzw. -effizienz werden erreicht, wenn die Aktivkohlefasern des Aktivkohlefaserflächengebildes aus carbonisierter und aktivierter Cellulose und/ oder aus carbonisiertem oder aktiviertem Polyacrylnitril bestehen; besonders gute Ergebnisse werden mit Aktivkohlefasern aus carbonisiertem und aktiviertem Polyacrylnitril erzielt, welche die beste mechanische Stabilität gewährleisten.

Die mechanische Stabilität des Aktivkohlefaserflächengebildes wird dadurch gesteigert, daß das Aktivkohlefaserflächengebilde aus sogenannten Filamentfasern, d. h. aus nichtgesponnenen Endlosfasem, besteht. Unter dem Begriff der Filament- bzw. Endlosfasern versteht man insbesondere auf chemisch-technischem Wege nach verschiedenen Verfahren erzeugte, praktisch endlose Fasern als Bestandteil von Textilerzeugnissen entsprechend DIN 60 001 T1 2 (10/1990); für weitere diesbezügliche Einzelheiten kann beispielsweise auf RÖMPP Chemielexikon, 9. Auflage, Band 2, 1997, Seite 1336, Stichwort: "Filament" verwiesen werden. Zwar können erfindungsgemäß grundsätzlich auch Spinnfasern zur Anwendung kommen, jedoch sind aus den vorgenannten Gründen, insbesondere aufgrund der verbesserten mechanischen Stabilität, Filamentfasern erfindungsgemäß bevorzugt.

Die mechanische Stabilität des erfindungsgemäßen Adsorptionsfiltermaterials läßt sich noch dadurch verbessern, daß die Aktivkohlefasern einen Titer (synonym auch als Feingehalt oder Feinheitsgrad bezeichnet), berechnet als Gewichtsangabe pro Länge, von mindestens 0,9 Denier, insbesondere von mindestens 1,0 Denier, vorzugsweise von mindestens 1,1 Denier, bevorzugt im Bereich von 0,8 bis 1,2 Denier, besonders bevorzugt im Bereich von 1,0 bis 1,2 Denier, aufweisen.

Zur Gewährleistung einer guten mechanischen Stabilität weisen die Aktivkohlefasern des Aktivkohlefaserflächengebildes im allgemeinen ein längenbezogenes Gewicht im Bereich von 1,0 bis 2,0 g/m, insbesondere 1,2 bis 1,8 g/m, vorzugsweise 1,4 bis 1,6 g/m, auf.

Bevorzugterweise besitzen die Aktivkohlefasern des Aktivkohlefaserflächengebildes eine Zugstärke bzw. Reißfestigkeit von mehr als 1,6 g/Denier, vorzugsweise von mehr als 1,8 g/Denier. Bevorzugt liegt die Bruchdehnung bzw. die maximale Dehnbarkeit der Aktivkohlefasern des Aktivkohlefaserflächengebildes bei mehr als 8 %, bezogen auf ihre Eigenlänge. Dies gewährleistet eine gute mechanische Belastbarkeit.

Zur Zwecken der Erhöhung des Tragekomfort einerseits und zu Zwecken der Verbesserung der Dehn- bzw. Belastbarkeitseigenschaften der Aktivkohlefasern des Aktivkohlefaserflächengebildes andererseits besitzen die Aktivkohlefasern einen gewissen Feuchtigkeitsgehalt, der im allgemeinen 5 bis 15 %, bezogen auf das Aktivkohlefasergewicht, beträgt.

Aus den vorgenannten Gründen ist es bevorzugt, wenn die Aktivkohlefasern des Aktivkohlefaserflächengebildes eine Dichte von mindestens 1,2 g/cm³, insbesondere von mindestens 1,3 g/cm³, vorzugsweise von mindestens 1,4 g/cm³, und von bis zu 2,0 g/cm³ aufweisen.

Um auch für den militärischen Einsatz besonders geeignet zu sein, ist es vorteilhaft, wenn die Aktivkohlefasern des Aktivkohlefaserflächengebildes nur schwer entflammbar sind, insbesondere einen Limiting Oxygen Index (L.O.I.) von mindestens 50 % aufweisen. Die flammhemmenden Eigenschaften können noch dadurch verstärkt werden, daß den Aktivkohlefasern entweder flammhemmende Substanzen zugesetzt oder aber die Aktivkohlefasern flammhemmend imprägniert sein können.

Um eine gute Adsorptionsleistung bzw. -effizienz zu gewährleisten, sollten die Aktivkohlefasern des Aktivkohlefaserflächengebildes eine innere Oberfläche (BET) von mindestens 800 m²/g, insbesondere von mindestens 900 m²/g, vorzugsweise von mindestens 1.000 m²/g, bevorzugt im Bereich von 800 bis 2.000 m²/g, insbesondere 1.000 bis 1.500 m²/g, aufweisen.

Erfindungsgemäß geeignete Aktivkohlefaserflächengebilde, welche die zuvor genannten Eigenschaften aufweisen, sind im Handel erhältlich. Beispielsweise werden erfindungsgemäß geeignete Materialien von den Firmen CCTeks bzw. Challenge Carbon Technology Co., Ltd. und TCT Taiwan Carbon Technologies, Taiwan, vertrieben.

Erfindungsgemäß geeignete Aktivkohlefaserflächengebilde können auch nach der WO-A-98/041678 bzw. der hieraus hervorgehenden EP 0 966 558 B1 bzw. DE 698 09 718 T2 oder nach der WO-A-01/70372 hergestellt werden, wobei der gesamte Offenbarungsgehalt der vorgenannten Druckschriften hiermit durch Bezugnahme eingeschlossen ist.

Zur Erhöhung der Adsorptionseffizienz bzw. -leistung besteht die Möglichkeit, daß die Adsorptionsschicht 5 bzw. das Aktivkohlefaserflächengebilde der Adsorptionsschicht 5 mit mindestens einem Katalysator imprägniert ist. Erfindungsgemäß geeignete Katalysatoren sind beispielsweise Enzyme und/oder Metalle, insbesondere Metallionen, vorzugsweise Kupfer-, Silber-, Cadmium-, Platin-, Palladium-, Zink- und/oder Quecksilberionen. Die Menge an Katalysatoren) kann in weiteren Bereichen variieren; im allgemeinen beträgt sie 0,05 bis 12 Gew.-%, vorzugsweise 1 bis 10 Gew.-%, besonders bevorzugt 2 bis 8 Gew.-%, bezogen auf das Aktivkohlefaserflächengebilde.

Was die erste und die zweite Trägerschicht 3, 4 des erfindungsgemäßen Adsorptionsfiltermaterials anbelangt, so sind diese im allgemeinen als textile Trägerschichten, insbesondere als textile Flächengebilde, ausgebildet. Beispiele hierfür sind Gewebe, Gewirke, Gestricke, Gelege, Vliese, Non-Wovens, Textilverbundstoffe und dergleichen. Besonders vorteilhaft ist es, wenn die erste Trägerschicht 3 und die zweite Trägerschicht 4 unterschiedliche Flächengewichte aufweisen.

Das erfindungsgemäße Adsorptionsfiltermaterial 1 liegt vorteilhafterweise als Verbundmaterial, insbesondere Laminat, vor, bei denen die einzelnen Schichten bzw. Lagen miteinander laminiert sind bzw. aufeinander aufkaschiert sind. Dies kann in an sich bekannter Weise geschehen.

Durch die erfindungsgemäße Ausgestaltung des Adsorptionsfiltermaterials nach der vorliegenden Erfindung wird eine ausgezeichnete Barrierewirkung gegenüber chemischen Kampfstoffen erreicht. Die Barrierewirkung des erfindungsgemäßen Adsorptionsfiltermaterials gegenüber chemischen Kampfstoffen, insbesondere Bis-[2-chlorethyl]sulfid (synonym auch als Senfgas, Lost oder Gelbkreuz bezeichnet), gemessen nach CRDEC-SP-84010, Methode 2.2, beträgt höchstens 4 µg/cm² pro 24 h, insbesondere höchstens 3,5 µg/cm² pro 24 h, vorzugsweise höchstens 3,0 µg/cm² pro 24 h, besonders bevorzugt höchstens 2,5 µg/cm² pro 24 h.

Die Gasdurchlässigkeit, insbesondere Luftdurchlässigkeit, sowie die Wasserdampfdurchlässigkeit sind für das erfindungsgemäße Adsorptionsfiltermaterial gleichermaßen von besonderer Bedeutung, weil diese Eigenschaften direkten Einfluß auf den Tragekomfort der hiermit hergestellten Schutzmaterialien und damit auch Auswirkung auf die Zeitdauer haben, für die das Schutzmaterial im Gebrauchszustand genutzt werden kann. Bevorzugt wird eine Luftdurchlässigkeit des erfindungsgemäßen Adsorptionsfiltermaterials nach DIN 53887 von mehr als 50 l/m² pro Sekunde, vorzugsweise von mehr als 100 l/m² pro Sekunde, insbesondere mehr als 150 l/m² pro Sekunde, bevorzugt mehr als 200 l/m² pro Sekunde, ganz besonders bevorzugt mehr als 300 l/m² pro Sekunde. Vorzugweise wird ein Wasserdampfdurchgangswiderstand Rₑₜ nach DIN EN 31092: 1993 vom Februar 1994 (siehe oben) von weniger als 10 (m² · Pascal)/Watt, insbesondere weniger als 8 (m² · Pascal)/Watt, vorzugsweise weniger als 4 (m² · Pascal)/Watt, ganz besonders bevorzugt weniger als 3 (m² · Pascal)/Watt, bevorzugt. Mit derselben Zielsetzung wird eine Wasserdampfdurchgangsrate gemäß der vorgenannten DIN EN 31092 von mindestens 10.000 g/m² in 24 h, insbesondere von mindestens 12.500 g/m² in 24 h, ganz besonders bevorzugt von mindestens 15.000 g/m² in 24 h oder mehr, bevorzugt.

Das erfindungsgemäße Adsorptionsfiltermaterial insgesamt besitzt im allgemeinen ein Flächengewicht von etwa 50 bis 900 g/m², insbesondere 150 bis 500 g/m², bevorzugt 200 bis 400 g/m².

Das erfmdungsgemäße Adsorptionsfiltermaterial hat weiterhin den Vorteil, daß es waschbar und ohne weiteres dekontaminierbar ist, so daß es zum vielfachen Einsatz geeignet ist. Unter dem Begriff der "Dekontaminierbarkeit" wird im Rahmen der vorliegenden Erfindung insbesondere verstanden, daß die Anteile an adsorbierten schädlichen Giften, die von dem Adsorptionsfiltermaterial zurückgehalten bzw. adsorbiert werden, bis auf einen akzeptablen Wert unter Bedingungen abbaubar sind, welche das Adsorptionsfiltermaterial im wesentlichen in seiner Funktion unbeeinträchtigt lassen und somit eine erneute Nutzung ermöglichen.

Abgesehen von den vorgenannten Schichten bzw. Lagen 2, 3, 4 und 5 kann das erfindungsgemäße Adsorptionsfiltermaterial 1 darüber hinaus noch weitere Schichten bzw. Lagen enthalten, welche in der einzigen Figur nicht dargestellt sind. Diese weiteren Schichten bzw. Lagen können mit den anderen Schichten des Schichtaufbaus verbunden sein oder lose bzw. unbefestigt hierüber gelegt werden. Diese weiteren Schichten bzw. Lagen können an die äußeren Trägerschichten 3 und/oder 4 angrenzen bzw. hieran befestigt sein, aber auch zwischen den Trägerschichten 3 und/oder 4 und der Adsorptionsschicht 5 angeordnet sein. Bei den zusätzlichen Schichten bzw. Lagen kann es sich beispielsweise um weitere textile Schichten, Membranen etc. handeln.

Beispielsweise kann das erfindungsgemäße Adsorptionsfiltermaterial als zusätzliche Schicht eine zumindest im wesentlichen wasser- und gasundurchlässige, aber wasserdampfdurchlässige Membran aufweisen, welche den Durchtritt chemischer und biologischer Gifte und Schadstoffe verzögert oder gegenüber chemischen und biologischen Giften und Schadstoffen zumindest im wesentlichen undurchlässig ausgebildet ist. Bei dieser Membran kann es sich beispielsweise um eine kontinuierliche, insbesondere geschlossene oder allenfalls mikroporöse Membran handeln. Dabei kann die Dicke der Membran im allgemeinen 1 bis 500 µm, insbesondere 1 bis 250 µm, vorzugsweise 1 bis 100 µm, bevorzugt 1 bis 50 µm, besonderes bevorzugt 2,5 bis 30 µm, ganz besonders bevorzugt 5 bis 25 µm, betragen. Zur Erhöhung des Tragekomforts, insbesondere der Atmungsaktivität, weist die Membran bei 25 °C und bei einer Dicke von 50 µm eine hohe Wasserdampfdurchlässigkeit von mindestens 12,5 l/m² pro 24 h, insbesondere mindestens 17,5 l/m² pro 24 h, vorzugsweise mindestens 20 l/m² pro 24 h oder mehr, auf (gemessen nach der "Methode des umgekehrten Bechers" bzw. "Inverted Cup Method" nach ASTM E 96 und bei 25 °C) (Zu weiteren Einzelheiten zur Messung der Wasserdampfdurchlässigkeit [Water Vapour Transmission, WVT] vgl. auch McCullough et al. "A comparison of standard methods for measuring water vapour permeability of fabrics" in Meas Sei. Technol. [Measurements Science and Technology] 14, 1402-1408, August 2003); hierdurch wird ein besonders hoher Tragekomfort gewährleistet. Die Membran sollte aus Gründen der Atmungsaktivität einen geringen Wasserdampfdurchgangswiderstand Rₑₜ unter stationären Bedingungen - gemessen nach DIN EN 31092: 1993 vom Februar 1994 ("Textilien - Physiologische Wirkungen, Messung des Wärme- und Wasserdampfdurchgangswiderstandes unter stationären Bedingungen [sweating guarded hotplate test]") bzw. nach gleichlautender internationaler Norm ISO 11 092 - bei 35 °C von höchstens 30 (m² · Pascal)/Watt, insbesondere höchstens 25 (m² · Pascal)/ Watt, vorzugsweise höchstens 20 (m² · Pascal)/Watt, bei einer Dicke der Membran von 50 µm aufweisen. Aufgrund der Vielzahl von Schichten des Schichtaufbaus ist der Wasserdampfdurchgangswiderstand Rₑₜ des Adsorptionsfiltermaterials insgesamt - im Vergleich zu der Membran allein - geringfügig höher; im allgemeinen beträgt der Wasserdampfdurchgangswiderstand Rₑₜ des Adsorptionsfiltermaterials insgesamt - bei Vorhandensein einer Membran - höchstens 30 (m² · Pascal)/Watt, insbesondere höchstens 25 (m² · Pascal)/Watt, vorzugsweise höchstens 20 (m² · Pascal)/Watt, bei einer Dicke der Membran von 50 µm. Eine Membran der vorgenannten Art kann beispielsweise aus einem Kunststoff oder einem Polymermaterial bestehen oder ein solches umfassen; ein solcher Kunststoff bzw. ein solches Polymer kann geeigneterweise beispielsweise ausgewählt aus der Gruppe von Polyurethanen, Polyetheramiden, Polyesteramiden, Polytetrafluorethylenen und/oder Polymeren auf Cellulosebasis sowie Derivaten der vorgenannten Verbindungen. Gemäß einer besonderen Ausführungsform kann die gegebenenfalls vorhandene Membran als ein mehrschichtiges Membranlaminat bzw. als ein mehrschichtiger Membranverbund ausgebildet sein, welches bzw. welcher aus mindestens zwei, vorzugsweise mindestens drei miteinander verbundenen Membranschichten oder -lagen bestehen kann. Auf diese Weise lassen sich verschiedene Membranmaterialien miteinander kombinieren.

Wie zuvor erwähnt, kann die Herstellung des erfindungsgemäßen Adsorptionsfiltermaterials in an sich bekannter Weise erfolgen; dies ist dem mit der Herstellung von Adsorptionsfiltermaterialien befaßten Fachmann bestens bekannt, so daß hierauf nicht näher eingegangen zu werden braucht. Beispielsweise kann der eingesetzte Klebstoff in den vorgenannten Mengen und in der vorgenannten Art und Weise auf die beiden Trägerschichten 3 und 4 aufgetragen werden, so daß diese anschließend mit der Adsorptionsschicht 5, die das Aktivkohlefaserflächengebilde umfaßt, verbunden bzw. laminiert werden können.

## Patentansprüche

1. Gas- und wasserdampfdurchlässiges Adsorptionsfiltermaterial (1) mit Schutzfunktion gegenüber biologischen und chemischen Schadstoffen und Giften, insbesondere biologischen und chemischen Kampfstoffen, wobei das Adsorptionsfiltermaterial (1) einen mehrschichtigen Schichtaufbau (2) mit einer ersten, insbesondere flächigen Trägerschicht (3), einer zweiten, insbesondere flächigen Trägerschicht (4) und einer zwischen der ersten Trägerschicht (3) und der zweiten Trägerschicht (4) angeordneten Adsorptionsschicht (5) aufweist, wobei die Adsorptionsschicht (5) ein Aktivkohlefaserflächengebilde umfaßt, das mit der ersten Trägerschicht (3) und der zweiten Trägerschicht (4) mittels eines Klebstoffs dauerhaft verklebt ist, wobei die Verklebung des Aktivkohlefaserflächengebildes mit der ersten Trägerschicht (3) und der zweiten Trägerschicht (4) jeweils durch einen diskontinuierlichen Klebstoffauftrag in Form von nichtzusammenhängenden Kleberpunkten (6) erfolgt,
**dadurch gekennzeichnet,**
**daß** das Aktivkohlefaserflächengebilde aus nichtgesponnenen Endlosfasern (Filamentfasern) besteht und
**daß** der Klebstoff das Aktivkohlefaserflächengebilde, jeweils bezogen auf eine Seite des Aktivkohlefaserflächengebildes, zu höchstens 15 % bedeckt.

2. Adsorptionsfiltermaterial nach Anspruch 1, **dadurch gekennzeichnet, daß** der Klebstoff das Aktivkohlefaserflächengebilde, jeweils bezogen auf eine Seite des Aktivkohlefaserflächengebildes, zu 5 bis 15 %, insbesondere 10 bis 15 %, bedeckt.

3. Adsorptionsfiltermaterial nach Anspruch 1 oder 2, **dadurch gekennzeichnet, daß** der Klebstoff, jeweils bezogen auf eine Seite des Aktivkohlefaserflächengebildes, mit einem Flächengewicht (Trockengewicht) von 5 bis 30 g/m², insbesondere 5 bis 25 g/m², vorzugsweise 10 bis 20 g/m², aufgetragen ist.

4. Adsorptionsfiltermaterial nach einem oder mehreren der vorangehenden Ansprüche, **dadurch gekennzeichnet, daß** der Klebstoff auf die Trägerschichten (3, 4) und/oder das Aktivkohlefaserflächengebilde aufgedruckt ist, insbesondere in Form eines unregelmäßigen, insbesondere computerberechneten Rasters oder Musters derart, daß im Gebrauchszustand des Adsorptionsfiltermaterials (1) eine Gassenbildung vermieden wird,

5. Adsorptionsfiltermaterial nach einem oder mehreren der vorangehenden Ansprüche, **dadurch gekennzeichnet, daß** der Klebstoffauftrag durch eine Schablone aufgedruckt ist, deren lichter Durchmesser für den Klebstoffauftrag 50 bis 1,000 µm, insbesondere 100 bis 575 µm, vorzugsweise 100 bis 300 µm, beträgt,

6. Adsorptionsfiltermaterial nach einem oder mehreren der vorangehenden Ansprüche, **dadurch gekennzeichnet, daß** der Klebstoff ein thermoplastischer Klebstoff ist.

7. Adsorptionsfiltermaterial nach einem oder mehreren der vorangehenden Ansprüche, **dadurch gekennzeichnet, daß** das Aktivkohlefaserflächengebilde ein Flächengewicht von 20 bis 200 g/m², insbesondere 50 bis 150 g/m², vorzugsweise 80 bis 120 g/m², besonders bevorzugt 90 bis 110 g/m², aufweist und/oder daß das Aktivkohlefaserflächengebilde eine Dicke von 0,1 bis 10 mm, insbesondere 0,2 bis 0,8 mm, vorzugsweise 0,3 bis 0,5 mm, aufweist.

8. Adsorptionsfiltermaterial nach einem oder mehreren der vorangehenden Ansprüche, **dadurch gekennzeichnet, daß** die Aktivkohlefasern des Aktivkohlefaserflächengebildes aus carbonisierter und aktivierter Cellulose und/oder aus carbonisiertem oder aktiviertem Polyacrylnitril, vorzugsweise aus carbonisiertem und aktiviertem Polyacrylnitril, bestehen.

9. Adsorptionsfiltermaterial nach einem oder mehreren der vorangehenden Ansprüche, **dadurch gekennzeichnet, daß** die Aktivkohlefasern des Aktivkohlefaserflächengebildes eine Feinheit, berechnet als Gewichtsangabe pro Länge (Titer), von mindestens 0,9 Denier, insbesondere von mindestens 1,0 Denier, vorzugsweise von mindestens 1,1 Denier, bevorzugt im Bereich von 0,8 bis 1,2 Denier, besonders bevorzugt im Bereich von 1,0 bis 1,2 Denier, aufweisen.

10. Adsorptionsfiltermaterial nach einem oder mehreren der vorangehenden Ansprüche, **dadurch gekennzeichnet, daß** die Aktivkohlefasern des Aktivkohlefaserflächengebildes einen Feuchtigkeitsgehalt von 5 bis 15 %, bezogen auf das Fasergewicht, aufweisen und/oder daß die Aktivkohlefasern des Aktivkohlefaserflächengebildes eine Zugstärke bzw, Reißfestigkeit von mehr als 1,5 g/Denier, insbesondere von mehr als 1,6 g/Denier, vorzugsweise von mehr als 1,8 g/Denier, aufweisen und/oder daß die Aktivkohlefasern des Aktivkohlefaserflächengebildes eine Bruchdehnung von mehr als 8 % aufweisen und/oder daß die Aktivkohlefasern des Aktivkohlefaserflächengebildes ein längenbezogenes Gewicht im Bereich von 1,0 bis 2,0 g/m, insbesondere 1,2 bis 1,8 g/m, vorzugsweise 1,4 bis 1,6 g/m, aufweisen

11. Adsorptionsfiltermaterial nach einem oder mehreren der vorangehenden Ansprüche, **dadurch gekennzeichnet, daß** die Aktivkohlefasern des Aktivkohlflächengebildes nur schwer entflammbar sind, insbesondere einen Limiting Oxygen Index (L.O.I.) von mindestens 50 % aufweisen, und/oder daß die Aktivkohlefasern des Aktivkohlefaserflächengebildes eine Dichte von mindestens 1,2 g/cm³, insbesondere von mindestens 1,3 g/cm³, vorzugsweise von mindestens 1,4 g/cm³, und von bis zu 2,0 g/cm³ aufweisen.

12. Adsorptionsfiltermaterial nach einem oder mehreren der vorangehenden Ansprüche, **dadurch gekennzeichnet, daß** die Aktivkohlefasern des Aktivkohlefaserflächengebildes mit mindestens einem Katalysator imprägniert sind, insbesondere wobei als Katalysator Enzyme und/oder Metallionen, vorzugsweise Kupfer-, Silber-, Cadmium-, Platin-, Palladium-, Zink- und/oder Quecksilberionen, verwendet sind und/oder insbesondere wobei die Menge an Katalysator 0,05 bis 12 Gew,-%, vorzugsweise 1 bis 10 Gew.-%, besonders bevorzugt 2 bis 8 Gew.-%, bezogen auf das Gewicht der Fasern, beträgt.

13. Adsorptionsfiltermaterial nach einem oder mehreren der vorangehenden Ansprüche, **dadurch gekennzeichnet, daß** die Aktivkohlefasern des Aktivkohlefaserflächengebildes eine innere Oberfläche (BET) der Aktivkohlefasern von mindestens 800 m²/g, insbesondere von mindestens 900 m²/g, vorzugsweise von mindestens 1.000 m²/g, bevorzugt im Bereich von 800 bis 2.000 g/m², insbesondere 1.000 bis 500 g/m², aufweisen.

14. Adsorptionsfiltermaterial nach einem oder mehreren der vorangehenden Ansprüche, **dadurch gekennzeichnet, daß** die erste und/oder zweite Trägerschicht (3, 4) als eine textile Trägerschicht ausgebildet ist, insbesondere als ein textiles Flächengebilde, vorzugsweise ausgewählt aus der Gruppe von Geweben, Gewirken, Gestricken, Gelegen, Vliesen, Non-Wovens und Textilverbundstoffen.

15. Adsorptionsfiltermaterial nach einem oder mehreren der vorangehenden Ansprüche, **dadurch gekennzeichnet, daß** die erste Trägerschicht (3) und die zweite Trägerschicht (4) unterschiedliche Flächengewichte aufweisen.

16. Adsorptionsfiltermaterial nach einem oder mehreren der vorangehenden Ansprüche, **dadurch gekennzeichnet, daß** es außerdem eine zumindest im wesentlichen wasser- und gasundurchlässige, aber wasserdampfdurchlässige, Membran aufweist, welche den Durchtritt chemischer und biologischer Gifte und Schadstoffe verzögert oder gegenüber chemischen und biologischen Giften und Schadstoffen zumindest im wesentlichen undurchlässig ist.

17. Schutzmaterialien, insbesondere Schutzanzüge, Schutzhandschuhe, Schutzschuhe, Schutzbekleidungsstücke, Schutzabdeckungen und Schlafsäcke, hergestellt unter Verwendung eines Adsorptionsfiltermaterials (1) nach einem der vorangehenden Ansprüche und/oder aufweisend ein Adsorptionsfiltermaterial (1) nach einem der vorangehenden Ansprüche,

18. Verwendung eines Adsorptionsfiltermaterials (1) nach einem der vorangehenden Ansprüche zur Herstellung von Schutzmaterialien aller Art, insbesondere von Schutzanzügen, Schutzhandschuhen, Schutzschuhen und anderen Schutzbekleidungsstücken und von Schutzabdeckungen und Schlafsäcken, insbesondere für zivile und militärische Zwecke, vorzugsweise für den ABC-Einsatz.

## Claims

1. A gas- and water vapour-permeable adsorbent filter material (1) with protective function against biological and chemical pollutants and toxins, especially biological and chemical warfare agents, wherein the adsorbent filter material (1) has a multilayer stratified structure (2) with a first, especially two-dimensional carrier layer (3), a second, especially two-dimensional carrier layer (4), and an adsorption layer (5) located between the first carrier layer (3) and the second carrier layer (4), wherein the adsorption layer (5) comprises an active carbon fibre textile fabric permanently bonded to the first carrier layer (3) and the second carrier layer (4) with an adhesive, wherein the bonding of the active carbon fibre textile fabric with the first carrier layer (3) and the second carrier layer (4) in each case takes place via discontinuous application of adhesive in the form of non-contiguous adhesive dots (6),
**characterised in that**
the active carbon fibre textile fabric consists of non-spun endless fibres (filament fibres) and
that the adhesive covers a maximum of 15% of the active carbon fibre textile fabric, in each case based on one side of the active carbon fibre textile fabric.

2. The adsorbent filter material according to claim 1, **characterised in that** the adhesive covers up to 5 to 15 %, especially 10 to 15 % of the active carbon fibre textile fabric, in each case based on one side of the active carbon fibre textile fabric.

3. The adsorbent filter material according to claim 1 or 2, **characterised in that** the adhesive is applied at a weight per unit area (dry weight) of 5 to 30 g/m², especially 5 to 25 g/m², preferably 10 to 20 g/m², in each case based on one side of the active carbon fibre textile fabric.

4. The adsorbent filter material according to one or more of the preceding claims, **characterised in that** the adhesive is printed onto the carrier layers (3, 4) and/or the active carbon fibre textile fabric, especially in the form of an irregular, especially computer-generated grid design, in such a manner that formation of channels is prevented during use of the adsorbent filter material (1).

5. The adsorbent filter material according to one or more of the preceding claims, **characterised in that** the adhesive is printed on through a stencil, the mesh opening of which for the adhesive application is 50 to 1000 µm, especially 100 to 575 µm, preferably 100 to 300 µm.

6. The adsorbent filter material according to one or more of the preceding claims, **characterised in that** the adhesive is a thermoplastic adhesive.

7. The adsorbent filter material according to one or more of the preceding claims, **characterised in that** the active carbon fibre textile fabric has a weight per unit area of 20 to 200 g/m², especially 50 to 150 g/m², preferably 80 to 120 g/m², particularly preferably 90 to 110 g/m², and/or that the active carbon fibre textile fabric has a thickness of 0.1 to 10 mm, especially 0.2 to 0.8 mm, preferably 0.3 to 0.5 mm.

8. The adsorbent filter material according to one or more of the preceding claims, **characterised in that** the active carbon fibres of the active carbon fibre textile fabric consist of carbonised and activated cellulose and/or of carbonised or activated polyacrylonitrile, preferably of carbonised and activated polyacrylonitrile.

9. The adsorbent filter material according to one or more of the preceding claims, **characterised in that** the active carbon fibres of the active carbon fibre textile fabric have a linear density, calculated as weight per unit length (titre), of at least 0.9 denier, advantageously of at least 1.0 denier, especially of at least 1.1 denier, preferably in the range of 0.8 to 1.2 denier, particularly preferably in the range of 1.0 to 1.2 denier.

10. The adsorbent filter material according to one or more of the preceding claims, **characterised in that** the active carbon fibres of the active carbon fibre textile fabric have a moisture content of 5 to 15 %, based on the fibre weight, and/or that the active carbon fibres of the active carbon fibre textile fabric have a tensile strength or breaking strength of more than 1.5 g/denier, especially of more than 1.6 g/denier, preferably of more than 1.8 g/denier, and/or that the active carbon fibres of the active carbon fibre textile fabric have an elongation at break of more than 8 % and/or that the active carbon fibres of the active carbon fibre textile fabric have a weight per unit length in the range of 1.0 to 2.0 g/m, especially 1.2 to 1.8 g/m, preferably 1.4 to 1.6 g/m.

11. The adsorbent filter material according to one or more of the preceding claims, **characterised in that** the active carbon fibres of the active carbon fibre textile fabric are of low flammability, in particular have a Limiting Oxygen Index (L.O.I.) of at least 50 %, and/or that the active carbon fibres of the active carbon fibre textile fabrics have a density of at least 1.2 g/cm³, especially of at least 1.3 g/cm³, preferably of at least 1.4 g/cm³, and of up to 2.0 g/cm³.

12. The adsorbent filter material according to one or more of the preceding claims, **characterised in that** the active carbon fibres of the active carbon fibre textile fabric are impregnated with at least one catalyst, especially wherein the catalysts used are enzymes and/or metal ions, preferably copper, silver, cadmium, platinum, palladium, zinc and/or mercury ions, and/or especially wherein the quantity of catalyst is from 0.05 to 12 wt.-%, preferably 1 to 10 wt.-%, particularly preferably 2 to 8 wt.-%, based on the weight of the fibres.

13. The adsorbent filter material according to one or more of the preceding claims, **characterised in that** the active carbon fibres of the active carbon fibre textile fabric have an internal surface area (BET) of the active carbon fibres of at least 800 m²/g, especially of at least 900 m²/g, advantageously of at least 1000 m²/g, preferably I'm in the range of 800 to 2000 g/m², especially 1000 to 500 g/m².

14. The adsorbent filter material according to one or more of the preceding claims, **characterised in that** the first and/or second carrier layer (3,4) is formed as a textile carrier layer, especially as a textile fabric, preferably selected from the group of woven fabrics, knitted fabrics, crocheted fabrics, laid fabrics, mats, non-wovens and textile composites.

15. The adsorbent filter material according to one or more of the preceding claims, **characterised in that** the first carrier layer (3) and the second carrier layer (4) have different weights per unit area.

16. The adsorbent filter material according to one or more of the preceding claims, **characterised in that** it also has a membrane that is at least essentially impermeable to water and gases, but permeable to water vapour, which retards the passage of chemical and biological toxins and pollutant or is at least essentially impermeable to chemical and biological toxins and pollutants.

17. The protective materials, especially protective suits, protective gloves, protective shoes, protective clothing items, protective coverings and sleeping bags, produced using an adsorbent filter material (1) according to one of the preceding claims and/or having an adsorbent filter material (1) according to one of the preceding claims.

18. The use of an adsorbent filter material (1) according to one of the preceding claims for producing protective materials of all kinds, especially of protective suits, protective gloves, protective shoes and other articles of protective clothing and of protective coverings and sleeping bags, especially for civil and military purposes, preferably for ABC use.

## Revendications

1. Matériau filtrant à adsorption (1) perméable à la vapeur d'eau et aux gaz avec une fonction de protection contre les poisons et polluants biologiques et chimiques, notamment les armes chimiques et biologiques, le matériau filtrant à adsorption (1) présentant une structure stratifiée à plusieurs couches (2) comprenant une première couche de support (3) notamment plate, une seconde couche de support (4) notamment plate et une couche d'adsorption (5) disposée entre la première couche de support (3) et la seconde couche de support (4), la couche d'adsorption (5) comprenant une construction surfacique en fibres de charbon actif, qui est collée de manière durable avec la première couche de support (3) et la seconde couche de support (4) au moyen d'un adhésif, le collage de la construction surfacique en fibres de charbon actif avec la première couche de support (3) et la seconde couche de support (4) étant effectué respectivement par le biais d'une application d'adhésif discontinue sous la forme de points d'adhésif discontinus (6),
**caractérisé en ce**
**que** la construction surfacique en fibres de charbon actif est constituée de fibres continues non filées (fibre de filament) et
en ce que l'adhésif recouvre la construction surfacique en fibres de charbon actif au maximum sur 15 %, notamment par rapport à un côté de la construction surfacique en fibres de charbon actif.

2. Matériau filtrant à adsorption selon la revendication 1, **caractérisé en ce que** l'adhésif recouvre la construction surfacique en fibres de charbon actif sur entre 5 et 15 %, en particulier entre 10 et 15 %, notamment par rapport à un côté de la construction surfacique en fibres de charbon actif.

3. Matériau filtrant à adsorption selon la revendication 1 ou 2, **caractérisé en ce que** l'adhésif, respectivement par rapport à un côté de la construction surfacique en fibres de charbon actif, est appliqué avec un grammage (poids à sec) de 5 à 30 g/m², en particulier de 5 à 25 g/m², de préférence de 10 à 20 g/m².

4. Matériau filtrant à adsorption selon une ou plusieurs des revendications précédentes, **caractérisé en ce que** l'adhésif est imprimé sur les couches de support (3, 4) et/ou la construction surfacique en fibres de charbon actif, notamment sous la forme d'une grille ou d'un motif irrégulier, notamment calculé par ordinateur de sorte que, dans l'état d'utilisation du matériau filtrant à adsorption (1), une accumulation de gaz soit évitée.

5. Matériau filtrant à adsorption selon une ou plusieurs des revendications précédentes, **caractérisé en ce que** l'application d'adhésif est imprimée à travers un pochoir, dont le diamètre libre pour l'application d'adhésif est de 50 à 1 000 µm, notamment de 100 à 575 µm, de préférence de 100 à 300 µm.

6. Matériau filtrant à adsorption selon une ou plusieurs des revendications précédentes, **caractérisé en ce que** l'adhésif est un adhésif thermoplastique.

7. Matériau filtrant à adsorption selon une ou plusieurs des revendications précédentes, **caractérisé en ce que** la construction surfacique en fibres de charbon actif présente un grammage de 20 à 200 g/m², en particulier de 50 à 150 g/m², de préférence de 80 à 120 g/m², de manière particulièrement préférée de 90 à 110 g/m² et/ou **en ce que** la construction surfacique en fibres de charbon actif présente une épaisseur de 0,1 à 10 mm, en particulier de 0,2 à 0,8 mm, de préférence de 0,3 à 0,5 mm.

8. Matériau filtrant à adsorption selon une ou plusieurs des revendications précédentes, **caractérisé en ce que** les fibres de charbon actif de la construction surfacique en fibres de charbon actif sont constituées de cellulose carbonisée et activée et/ou de polyacrylonitrile carbonisée et activée, de préférence de polyacrylonitrile carbonisée et activée.

9. Matériau filtrant à adsorption selon une ou plusieurs des revendications précédentes, **caractérisé en ce que** les fibres de charbon actif de la construction surfacique en fibres de charbon actif présentent une finesse, calculée à partir de l'indication de poids par longueur (titre), d'au moins 0,9 denier, en particulier d'au moins 1,0 denier, de préférence d'au moins 1,1 denier, préférablement dans la plage de 0,8 à 1,2 denier, de manière particulièrement préférée dans la plage de 1,0 à 1,2 denier.

10. Matériau filtrant à adsorption selon une ou plusieurs des revendications précédentes, **caractérisé en ce que** les fibres de charbon actif de la construction surfacique en fibres de charbon actif présente une teneur en humidité de 5 à 15 %, par rapport au poids des fibres et/ou **en ce que** les fibres de charbon actif de la construction surfacique en fibres de charbon actif présentent une résistance à la traction ou une résistance à la déchirure supérieure à 1,5 g/denier, notamment supérieure à 1,6 g/denier, de préférence supérieure à 1,8 g/denier et/ou **en ce que** les fibres de charbon actif de la construction surfacique en fibres de charbon actif présentent un allongement à la rupture supérieur à 8 % et/ou **en ce que** les fibres de charbon actif de la construction surfacique en fibres de charbon actif présentent un poids longitudinal dans la plage de 1,0 à 2,0 g/m, en particulier 1,2 à 1,8 g/m, de préférence de 1,4 à 1,6 g/m.

11. Matériau filtrant à adsorption selon une ou plusieurs des revendications précédentes, **caractérisé en ce que** les fibres de charbon actif de la construction surfacique en charbon actif ne sont que difficilement inflammable, en particulier présentent un indice limite d'oxygène (L.O.I.) d'au moins 50 % et/ou **en ce que** les fibres de charbon actif de la construction surfacique en fibres de charbon actif présentent une épaisseur d'au moins 1,2 g/cm³, en particulier d'au moins 1,3 g/cm³, de préférence d'au moins 1,4 g/cm³ et de jusqu'à 2,0 g/cm³.

12. Matériau filtrant à adsorption selon une ou plusieurs des revendications précédentes, **caractérisé en ce que** les fibres de charbon actif de la construction surfacique en fibres de charbon actif sont imprégnées avec au moins un catalyseur, en particulier dans lequel des enzymes et/ou ions métalliques, de préférence des ions de cuivre, d'argent, de cadmium, de platine, de palladium, de zinc et/ou de mercure sont utilisés comme catalyseur et/ou en particulier dans lequel la quantité de catalyseur est de 0,05 à 12 % en poids, de préférence de 1 à 10 % en poids, de manière particulièrement préférée de 2 à 8 % en poids, par rapport au poids des fibres.

13. Matériau filtrant à adsorption selon une ou plusieurs des revendications précédentes, **caractérisé en ce que** les fibres de charbon actif de la construction surfacique en fibres de charbon actif présentent une surface interne (BET) des fibres de charbon actif d'au moins 800 m²/g, en particulier d'au moins 900 m²/g, de préférence d'au moins 1 000 m²/g, préférablement dans la plage de 800 à 2 000 g/m², en particulier de 1 000 à 500 g/m².

14. Matériau filtrant à adsorption selon une ou plusieurs des revendications précédentes, **caractérisé en ce que** la première et/ou la seconde couche de support (3, 4) est formée comme une couche de support textile, notamment comme une construction surfacique textile, de préférence choisie dans le groupe constitué de tissus, mailles, tissus tricotés, nappes, non-tissés, tissus non tissés et étoffes non tissées.

15. Matériau filtrant à adsorption selon une ou plusieurs des revendications précédentes, **caractérisé en ce que** la première couche de support (3) et la seconde couche de support (4) présentent des grammages différents.

16. Matériau filtrant à adsorption selon une ou plusieurs des revendications précédentes, **caractérisé en ce qu'**il présente en outre une membrane au moins essentiellement perméable à l'eau et aux gaz mais imperméable à la vapeur d'eau, qui retarde le passage de polluants et de poisons chimiques et biologiques ou qui est au moins essentiellement imperméable aux polluants et poisons chimiques et biologiques.

17. Matériau de protection, notamment équipement de protection, gants de protection, chaussures de protection, articules vestimentaires de protection, couvertures de protection et sacs de couchage, fabriqués en utilisation un matériau filtrant à adsorption (1) selon une des revendications précédentes et/ou présentant un matériau filtrant à adsorption (1) selon une des revendications précédentes.

18. Utilisation d'un matériau filtrant à adsorption (1) selon une des revendications précédentes, pour la fabrication de matériaux de protection de toutes sortes, notamment d'équipements de protection, de gants de protection, de chaussures de protection et d'autres articles vestimentaires de protection et de couvertures de protection et sacs de couchage, en particulier à des fins civiles et militaires, de préférence pour l'intervention ABC.
